(19) Europäisches Patentamt
European Patent Office
Office européen des brevets

(11) **EP 1 225 356 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.$^7$: **F16D 1/06**

(21) Anmeldenummer: **01101247.3**

(22) Anmeldetag: **19.01.2001**

(54) **Welle-Nabe-Verbindung**

Shaft-hub connection

Liaison arbre-moyeu

(84) Benannte Vertragsstaaten:
**DE FR GB**

(43) Veröffentlichungstag der Anmeldung:
**24.07.2002 Patentblatt 2002/30**

(73) Patentinhaber: **Visteon Global Technologies, Inc.
Dearborn, Michigan 48126 (US)**

(72) Erfinder:
- **SIMONS Karl-Heinz
  D-52399 Merzenich (DE)**
- **SVENSSON Thomas
  D-50939 Köln (DE)**

(74) Vertreter: **Bauer, Wulf, Dr.
Lindenallee 43
50968 Köln-Marienburg (DE)**

(56) Entgegenhaltungen:
| | |
|---|---|
| **EP-A- 0 331 412** | **DE-A- 3 511 534** |
| **DE-A- 19 836 259** | **FR-A- 1 097 515** |
| **GB-A- 2 152 631** | **JP-A- 8 270 642** |
| **US-A- 2 729 458** | **US-A- 3 742 656** |
| **US-A- 5 207 132** | **US-A- 5 533 825** |
| **US-A- 5 551 811** | **US-A- 5 779 551** |

- **PATENT ABSTRACTS OF JAPAN vol. 008, no. 057 (M-283), 15. März 1984 (1984-03-15) & JP 58 211019 A (HINO JIDOSHA KOGYO KK), 8. Dezember 1983 (1983-12-08)**

**Beschreibung**

Die vorliegende Erfindung betrifft eine Welle-Nabe-Verbindung zur Drehmomentübertragung, mit den eine gemeinsame Längsachse aufweisenden Bauteilen:

    a) eine um die Längsachse rotierbare Welle und

    b) eine zu der Welle koaxiale, über einen Mitnahmelängenabschnitt die Welle mit ihrer Innenkontur umschließende Nabe,

wobei die Welle und die Innenkontur der Nabe im Bereich des Mitnahmelängenabschnitts zumindest einen Halteabschnitt mit unrundem Querschnitt für die Übertragung des Drehmoments aufweisen.

Derartige Welle-Nabe-Verbindungen werden im Maschinenbau in vielfältiger Weise zur Übertragung von Drehmomenten zwischen der Welle und der Nabe eingesetzt. Neben einer Vielzahl von Anforderungen ist die wesentliche Aufgabe derartiger Verbindungen meist die Übertragung hoher Drehmomente. Die Verbindungen sollen dabei möglichst kompakt und leicht sein sowie ohne umfangreiche Einstell- und Nachstellarbeiten montierbar sein. Grundsätzlich ist allen Ausführungsformen gemein, dass die Drehmomentübertragung die Welle-Nabe-Verbindung belastet. Dabei sind dynamische Belastungen meist höher als statische Belastungen.

Da es sich bei einer konventionellen Welle-Nabe-Verbindung meist nicht um eine Presspassung handelt, ist nur ein gewisser Anteil der Kontaktflächen wirklich an der Drehmomentübertragung beteiligt. Dieses verursacht hohe Spannungen in den Bauteilen, die durch eine entsprechend lange Verbindung ausgeglichen bzw. vermindert werden müssen. Die vergrößerte Länge der Verbindung verursacht aber wiederum größere Rundlauffehler und verstärkt eine Relativbewegung zwischen Welle und Nabe, während der keine Drehmomentübertragung stattfindet (das sogenannte Spiel). Die Vergrößerung der Rundlauffehler führt zusätzlich zu ungewollten Geräuschen und Schwingungen. Weiterhin erleichtert eine längere Verbindung das Gleiten der Oberflächen aufeinander, wodurch wiederum die Bildung von Passungsrost gefördert wird. Schließlich führen diese Effekte zu einer Verminderung der Lebensdauer der Welle-Nabe-Verbindung und damit des gesamten Systems.

Die DE 198 36 259 A1 zeigt eine drehfeste Welle-Nabe-Verbindung, bei der die Nabe zur Verminderung bzw. zur Vermeidung des ungewollten Spiels mittels einer Radial-Preßeinrichtung in Richtung auf die Drehachse derart zusammenpreßbar ist, dass sich die Innenkontur der Nabe in spielfreiem Eingriff mit der Welle befindet. Nachteilig bei dieser Ausführungsform ist die Notwendigkeit zusätzlicher Bauteile, die mit höherem Platzbedarf und Kosten verbunden ist.

Bekannt zur Verminderung bzw. Vermeidung ungewollten Spiels sind außerdem Spannsatzverbindungen, bei denen zwischen der Welle und der Nabe ein Spannsatz angeordnet ist. Ein solcher Spannsatz weist mindestens ein Element auf, durch das der Ringquerschnitt des Spannsatzes vergrößert werden kann und dadurch der Spannsatz einerseits gegen die Mantelfläche der Welle und andererseits gegen die Innenfläche der Nabenbohrung gedrückt und eine spielfreie Verbindung geschaffen wird. Die DE 36 36 393 A1 beschreibt derartige Spannsätze, bei denen der Formschluss dadurch erreicht wird, dass sowohl Welle als auch Nabe mit einer Längsverzahnung versehen sind und der Spannsatz innenseitig sowie außenseitig eine hierzu jeweils entsprechende Längsverzahnung aufweist. Auch diese Ausführungsform ist aufgrund der zusätzlichen Bauteile mit entsprechend höheren Kosten mit relativ hohem Platzbedarf verbunden. Für die Montage des Spannsatzes ist ein zusätzlicher zeit- und damit kostenintensiver Arbeitsschritt notwendig.

Auch bekannt ist die Verwendung von keilförmigen Elementen, die zwischen Welle und Nabe eingefügt werden. Diese führen jedoch zu einer Exzentrizität der Welle und damit zu punktuellen bzw. relativ kleinen Kontaktflächen zwischen Welle und Nabe. Dies wird oftmals in Kauf genommen, da eine Vergrößerung bzw. eine gleichmäßigere Verteilung der Kontaktflächen innerhalb des Mitnahmeabschnittes nur, wie bereits ausgeführt, mit zusätzlichen Bauteilen und erheblichem Aufwand möglich erschien.

Die DE 3511534 A beschreibt eine biegsame Welle, die einen prismatischen Abschnitt zum Einfügen in eine Nabe aufweist, der über seine ganze Länge verdrillt ausgeformt ist. Durch die Verdrillung oder Torsion wird erreicht, dass die Welle spielfrei in der Nabe gehalten wird. Nachteilig bei der kontinuierlichen Verdrillung ist, dass diese zu Belastungsspitzen führt, die wiederum Passungsrost in der Verbindung verursachen. Die Belastungsspitzen führen weiterhin dazu, dass die Welle-Nabe-Verbindung nur eine geringe Lebensdauer aufweist.

Eine ähnliche Verbindung zeigt die JP 08270642A. Diese beschreibt eine Welle mit dreieckigem Querschnitt, die in eine Nabe mit dreieckiger Innenkontur eingeführt wird. Durch Verdrehen der Welle erfolgt eine Selbstzentrierung der Welle in der Nabe dadurch, dass die drei Flanken der Welle in Kontakt mit der Innenkontur der Nabe kommt. Nachteilig bei dieser Verbindung ist, dass eine Drehmomentübertragung in beide Richtungen nicht möglich ist. Sobald die Welle zurückgedreht wird, steht sie nicht mehr in spielfreier Verbindung mit der Nabe.

Der vorliegenden Erfindung liegt die Aufgabe zugrunde, eine Welle-Nabe-Verbindung mit hoher Funktionalität und Lebensdauer zu schaffen. Bei einfacher Konstruktion soll eine möglichst gute Übertragung des Drehmomentes erreicht werden. Die Verbindung soll darüber hinaus kostengünstig herstellbar und mit geringem Aufwand montierbar sein.

Erfindungsgemäß wird dies durch die Merkmale des kennzeichnender Teils von Anspruch 1 erreicht.

Der Erfindung liegt die Erkenntnis zugrunde, dass hohe Spannungen im Bauteil, Ermüdung, Rundlauf und Schwingungen durch eine Verringerung des Spiels zwischen Welle und Nabe nur dann zielführend vermindert oder aufgehoben werden können, wenn die Verringerung des Spiels bei zentrierter Position der Welle in der Nabe erfolgt. Die Erfinder haben erkannt, dass durch zueinander um ihre Längsachse versetzte Längenabschnitte eines der Bauteile im Bereich des Mitnahmelängenabschnitts die Zentrizität der Welle in der Nabe gewährleistet ist und dadurch eine gleichmäßige Drehmomentübertragung erreicht werden kann. Dies kann beispielsweise durch Torsion erreicht werden, die sich über die gesamte Länge des Mitnahmelängenabschnitts erstreckt oder auch durch zwei nicht tordierte, über einen Verbindungsabschnitt miteinander verbundene und gegeneinander versetzte Längenabschnitte. Auch möglich sind mehrere Verbindungsabschnitte, die jeweils Längenabschnitte stufig oder kontinuierlich gegeneinander versetzen.

Die Verminderung oder Aufhebung des Spiels bei zentrierter Welle führt zu einer günstigen Kraftverteilung während der Drehmomentübertragung und verringert dadurch Spannungen im Bauteil, Ermüdung, Rundlauf und Schwingungen. Das Zusammenfügen, insbesondere Einfädeln bzw. Einführen der Verbindung kann einfach und schnell durchgeführt werden.

Die kontinuierliche Torsion erlaubt ein Einführen der Welle mit einem Eingangsquerschnitt voran in die Nabe, die bei anschließendem tieferen Einführen aufgrund der Torsion verdreht wird und schließlich sowohl mit dem Einals auch mit einem Ausgangsquerschnitt mit der Nabe in Kontakt kommt. Die Begriffe Einund Ausgangsquerschnitt sind dabei in Einführrichtung der Welle in die Nabe zu verstehen und beziehen sich auf die einander gegenüberliegenden Enden des Mitnahmelängenabschnitts.

Durch die Tiefe des Einführens der Welle in die Nabe kann sowohl eine Verringerung als auch eine vollständige Vermeidung des Spiels durch Anlage (Vorspannung) der Welle an der Nabe sowie schließlich eine Klemmwirkung zwischen Welle und Nabe erreicht werden. Somit ist eine spielfreie Drehmomentübertragung in beide Richtungen bzw. ein spielfreier Richtungswechsel möglich. In allen Fällen ergeben sich mindestens in den Bereichen der Einund Ausgangsquerschnitte der Welle Kontaktpunkte oder -flächen zwischen Nabe und Welle. Aufgrund von Elastizität bzw. Plastizität der Werkstoffe kann durch verstärkte Torsion vor oder während der Drehmomentübertragung durch Verformung der Welle und/oder Nabe auch eine Anlage über die gesamte Länge des Mitnahmelängenabschnitts erreicht werden.

Über den Grad der Torsion können weiterhin verschiedene Funktionen und Parameter der Welle-Nabe-Verbindung beeinflusst und bestimmt werden. Ein geringer Grad der Torsion führt beispielsweise dazu, dass eine stärkere Verdrehung des tordierten Bauteils notwendig oder möglich ist, bis der gewünschte Effekt, beispielsweise die vollständige Aufhebung des Spiels erreicht ist. Eine in Richtung des Ausgangsquerschnitts progressiv verlaufende Torsion führt dagegen zu einem einfachen Einführen und einem sich anschließenden zunehmenden Verdrehen der Welle auf einer zunehmend geringeren Strecke. Eine Verminderung oder Aufhebung des Spiels sowie eine Klemmwirkung können durch die kurze Einführstrecke bei der Montage schnell und einfach erreicht werden. Für spezielle Anwendungsfälle ist auch eine degressive Torsion in Richtung des Ausführquerschnitts denkbar. Möglich sind auch Mischformen, also über die Länge des Mitnahmelängenabschnitts wechselhaft (degressiv, progressiv, linear) tordierte Bauteile.

Als besonders vorteilhaft haben sich polygone, insbesondere trochoidische geformte Querschnitte der Welle und der Nabe erwiesen. Eine Trochoide entsteht als Bahnkurve eines Punktes, wenn dieser beim Abrollen eines Kreises (Gangkreis) auf oder in einem Kreis (Rastkreis) mitgeführt wird. Die Anzahl und Ausführung der trochoidischen "Ein- bzw. Ausbuchtungen" sind dabei variabel. Es hat sich gezeigt, dass durch den Einsatz einer optimierten trochoidischen Kontur hinsichtlich der Anzahl der "Ein- bzw. Ausbuchtungen" und deren große und kleinen Durchmessern eine Drehmomentübertragung bei minimalen Spannungen sowie gleichzeitig minimaler Relativbewegung zwischen den sich berührenden Oberflächen möglich ist. Kleine Unterschiede in der Kontur der sich berührenden Bauteile ermöglichen eine Veränderung der Eigenschaften der Welle-Nabe-Verbindung, insbesondere der Lebensdauer und Festigkeit.

Die erfindungsgemäße Welle-Nabe-Verbindung eignet sich insbesondere für einen Einsatz in der Kraftfahrzeugtechnologie, beispielsweise für Brrennsystemen und Radaufhängungen von Kraftfahrzeugen. Hierbei ist von Vorteil, dass eine erfindungsgemäße Nabe mit polygoner Innenkontur beim Herstellungsprozeß nicht geräumt werden muss. Eine Herstellung aus Stahl ist somit nicht notwendig, die Nabe könnte beispielsweise auch aus Gußeisen gefertigt sein. Die erfindungsgemäße Welle-Nabe-Verbindung eignet sich auch deshalb besonders für einen derartigen Einsatz, da zum Beispiel Brrennsystemen hohen thermischen Belastungen ausgesetzt sind.

Weitere vorteilhafte Ausgestaltungsmerkmale der Erfindung sind in den Unteransprüchen sowie der folgenden Beschreibung enthalten.

Anhand in der Zeichnung veranschaulichten, bevorzugten Ausführungsbeispielen soll im folgenden die Erfindung genauer erläutert werden. Es zeigen:

Fig. 1:    Querschnitt einer erfindungsgemäßen Welle-Nabe-Verbindung im Bereich des Eingangsquerschnitts,

Fig. 2: Querschnitt einer erfindungsgemäßen Welle-Nabe-Verbindung im mittleren Bereich der Verbindung,

Fig. 3: Querschnitt einer erfindungsgemäßen Welle-Nabe-Verbindung im Bereich des Ausgangsquerschnitts,

Fig. 4: perspektivische Darstellung einer Welle-Nabe-Verbindung, wobei die Welle nicht tordierte Wellenabschnitte aufweist, die über einen Torsionsabschnitt miteinander verbunden sind.

Fig. 5: Prinzipdarstellung der Herstellung der Welle gemäß Fig.4,

Fig. 6: perspektivische Darstellung einer Welle-Nabe-Verbindung für ein Bremssystem eines Kraftfahrzeugs, teilweise geschnitten.

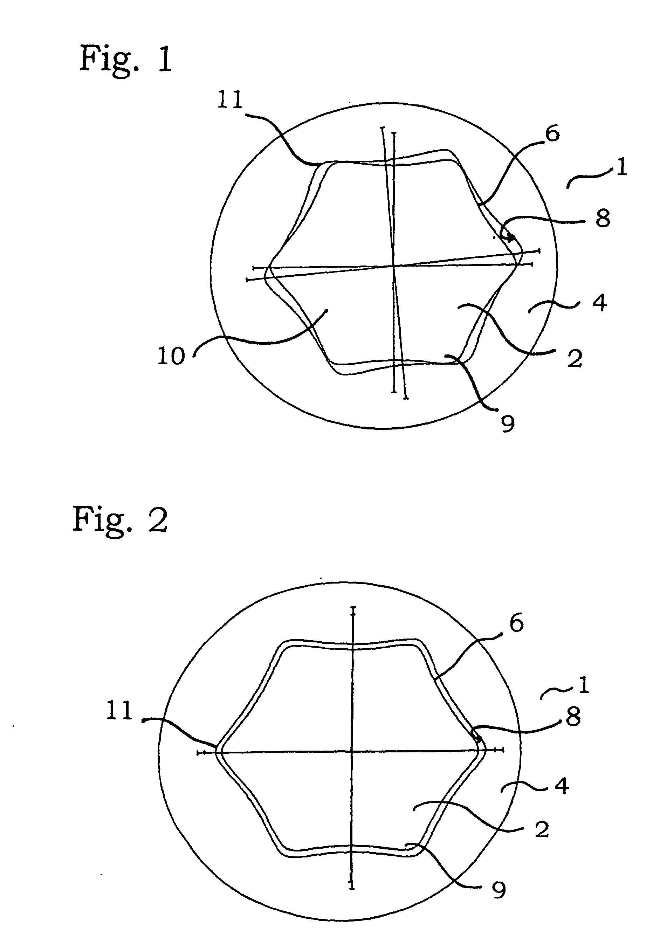

Eine Welle-Nabe-Verbindung 1 kann aus mehreren Bauteilen von Wellen 2 und Naben 4 bestehen. Die in den Fig. 1 bis 4 dargestellten Ausführungsbeispiele weisen beispielhaft je eine Welle 2 und eine Nabe 4 auf.

Die Fig. 1 bis 3 zeigen Querschnitt durch eine erfindungsgemäße Welle-Nabe-Verbindung 1. Eine Welle 2 mit einer Außenkontur 6 ist in einer Nabe 4 mit einer Innenkontur 8 geführt. Die Welle 2 weist trochoidische Ausbuchtungen 9 und die Nabe 4 bezogen auf ihren Querschnitt trochoidische Einbuchtungen 11 auf. Grundsätzlich eignen sich aber für die Ausführung der Erfindung auch sämtliche anderen unrunden Querschnittsformen. Insbesondere hat sich ein sechsseitiges Polygon für die Übertragung des Drehmomentes als besonders geeignet herausgestellt. Dabei hat sich ebenfalls gezeigt, dass bei einem sechsseitigen Polygon eine relative Exzentrizität E zwischen 2 und 10 %, vorzugsweise etwa 3 und 5 % gegeben sein sollte. Die relative Exzentrizität E beschreibt die Exzentrizität des Polygons bezogen auf den nicht-physikalischen mittleren Durchmesser $D_m$ in Prozent, beschreibt also eine Relation zwischen einem äußeren Durchmesser $D_o$ und einem inneren Durchmesser $D_i$ des Polygons. $D_m$ ist der Durchmesser einer Kreisscheibe mit gleichem Flächeninhalt wie das Polygon. Der Begriff Polygon ist hier nicht im strengen Sinn des Wortes zu verstehen, sondern vielmehr als angenähertes, polygonähnliches Vieleck. Die relative Exzentrizität E kann nach folgender Formel errechnet werden:

$$E = D_i + 2 \times \varepsilon$$

mit

$$\varepsilon = \text{Unrundheit des Polygons}$$

Die relative Exzentrizität E sollte vorteilhafterweise aus folgender Formel abgeleitet werden:

$$E = (D_o - D_i/D_o - D_i) \times 50$$

Besonders vorteilhafte Polygonformen ergeben sich bei Verwendung des IPROTEC-Prozesses und können insbesondere nach folgenden Formeln berechnet werden (Abweichung +/- 10%):

$$x\,(\gamma) = (D_m/2) \times \cos\,(\gamma) + \varepsilon \times \cos\,((n\text{-}1) \times \gamma)$$

$$y\,(\gamma) = (D_m/2) \times \sin\,(\gamma) - \varepsilon \times \sin\,((n\text{-}1) \times \gamma)$$

mit

$$\gamma = 0 \text{ bis } 360°, \text{ durchlaufender Parameter}$$

$$n = \text{Anzahl der Seiten des Polygons}$$

$$\varepsilon = E \times D_m \times 100$$

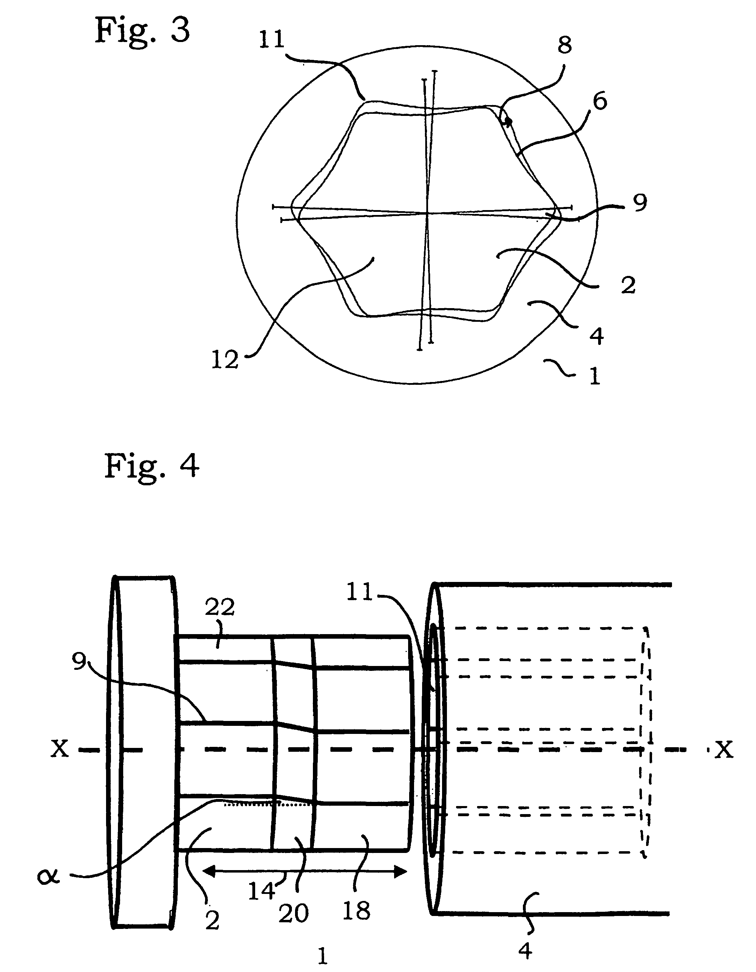

Fig. 4 zeigt zur Verdeutlichung eine dreidimensionale Prinzipdarstellung der erfindungsgemäßen Welle-Nabe-Verbindung 1. Die Welle 2 mit trochoidischen Ausbuchtungen 9 ist in eine Nabe 4 mit ebenfalls trochoidischer Innenkontur 8 einführbar. Die Welle 2 hat einen Eingangsquerschnitt 10 und einen Ausgangsquerschnitt 12, wobei die Begriffe "Eingang" und "Ausgang" in Einführrichtung der Welle in die Nabe 4 zu verstehen sind; der Eingangsquerschnitt 10 wird beispielsweise in axialer Richtung in die Nabe 4 eingeführt, bis auch der Ausgangsquerschnitt 12 von der Nabe umschlossen ist. Die Welle 2 und die Nabe 4 weisen im zusammengefügten Zustand eine gemeinsame Längsachse X-X auf. Der im Zustand des Zusammenbaus ein Drehmoment übertragende Kontaktbereich zwischen der Welle 2 und der Nabe 4 wird als Mitnahmelängenabschnitt 14 bezeichnet. Der Mitnahmelängenabschnitt 14 ist aufgrund von Fertigungstoleranzen in der Regel kürzer als die geometrische Länge der in die Nabe 4 einführbaren Welle 2.

In den dargestellten Ausführungsbeispielen ist der Querschnitt bzw. ist die Innenkontur 8 der Nabe 4 über die gesamte Länge des Mitnahmelängenabschnitts 14 konstant, also weder tordiert noch winkelversetzt.

Die Fig. 1 bis 3 beziehen sich auf eine zusammengefügte Welle-Nabe-Verbindung 1 mit einer Welle 2, die über die gesamte Länge des Mitnahmelängenabschnitts 14 kontinuierlich tordiert ist. Nach Einführen des Eingangsquerschnitt 10 in die Nabe 4 werden die weist trochoidische Ausbuchtungen 9 durch die Torsion der Welle 2 bei weiterem Einführen gegen die Innenkontur 8 Nabe 4 gedrückt. Das anfänglich aufgrund der unterschiedlichen Querschnittsflächen der Welle 2 und der Innenkontur 8 vorhandene Spiel der Welle 2 verringert sich bzw. wird dann aufgehoben, wenn sowohl der Eingangsquerschnitt 10 als auch der Ausgangsquerschnitt 12 der Welle 2 in der Nabe zur Anlage kommen. Je nach Kraftaufwand kann bei weiterem Einführen bzw. Verdrehen der Welle 2 eine Vorspannung oder Klemmen der Welle 2 in der Nabe 4 erreicht werden, ohne das es zu Exzentrizität der Welle 2 kommen kann.

Fig. 1 zeigt einen Querschnitt der Welle-Nabe-Verbindung 1 im Bereich des Eingangsquerschnitt 10, Fig. 2 einen Querschnitt des mittleren Bereichs des Mitnahmelängenabschnitts 14 und Fig. 3 einen Querschnitt im Bereich des Ausgangsquerschnitts 12. Die Anlage der trochoidischen Ausbuchtungen 9 der Welle 2 an den trochoidischen Einbuchtungen 11 der Nabe 4 ist deutlich zu erkennen. Im Gegensatz zum mittleren Bereich der Welle 2 (Fig. 2) befindet sich die Welle 2 sowohl im Bereich des Eingangsquerschnitts 10 (Fig. 1) als auch im Bereich des Ausgangsquerschnitts 12 (Fig. 3) in Anlage mit der Nabe 4.

Fig. 4 zeigt eine Welle 2 mit trochoidischem Querschnitt, die im Bereich des Mitnahmelängenabschnitts 14 drei Längenabschnitte aufweist. Die Darstellung ist lediglich prinzipiell zu verstehen, die geometrischen Verhältnisse sind zum besseren Verständnis teilweise nicht exakt wiedergegeben. Ausgehend vom Eingangsquerschnitt 10 ist ein erster Halteabschnitt 18 über einen torodierten Verbindungsabschnitt 20 mit einem zweiten Halteabschnitt 22 verbunden, wobei die beiden Halteabschnitte 18, 22 aufgrund der Torsion des Verbindungsabschnitts 20 einen Winkelversatz um ihre Längsachse X-X zueinander aufweisen. Die trochoidischen Ausbuchtungen 9 der Halteabschnitte 18, 22 verlaufen jeweils parallel zueinander. Nach Einführen des Eingangsquerschnitts 10 erfolgt bei einer solchen Ausführungsform zunächst ein gerades, drehfestes Einführen der Welle 2. Erst wenn der Verbindungsabschnitt 20 mit der Nabe 4 in Kontakt kommt, wird die Welle 2 bei weiterem Einführen um ihre Längsachse X-X gedreht und der zweite Halteabschnitt 22 gegen die Innenkontur der Nabe gedrückt. Durch den Winkelversatz der Halteabschnitte 18, 22 zueinander wird das Spiel in der Verbindung im gefügten Zustand reduziert. Beide Halteabschnitte 18, 22 befinden sich über ihre gesamte Länge in Anlage mit der Nabe 4 und sind somit jeweils mit ihrer gesamten Länge an der Drehmomentübertragung beteiligt. Die entlang des Verbindungsabschnitts 20 verlaufenden Ausbuchtungen 9 schließen mit der Längsachse X-X einen Winkel α ein, der derart flach ausgeführt sein kann, dass eine Selbsthemmung zwischen Welle 2 und Nabe 4 ausgeschlossen ist. Sollte der Winkel α derart ausgeführt sein, dass die Selbsthemmung zwischen der Welle 2 und der Nabe 4 gegeben ist, ist während des Einführvorgangs der Welle 2 in die Nabe 4 eine elastische oder plastische Verformung der Welle 2 notwendig. In einer besonders vorteilhaften Ausführungsform beträgt die Länge des Verbindungsabschnitts 20 weniger als 30 % der Gesamtlänge des Mitnahmeabschnitts 14. Grundsätzlich ist eine besonders kurzer Verbindungsabschnitt 20 anzustreben, da dieser im zusammengefügten Zustand der Welle-Nabe-Verbindung 1 kaum oder nicht an der Drehmomentübertragung beteiligt ist. Bei dieser Ausführungsform kann bei entsprechendem Grad der Torsion sogar erreicht werden, dass die Bauteile bei gleichzeitigem Kontakt beider Halteabschnitte 18, 22 mit der Nabe 4 axial zueinander bewegbar sind. Der Winkelversatz ermöglicht somit eine spielfreie Drehmomentübertragung bei vorgespannter Verbindung.

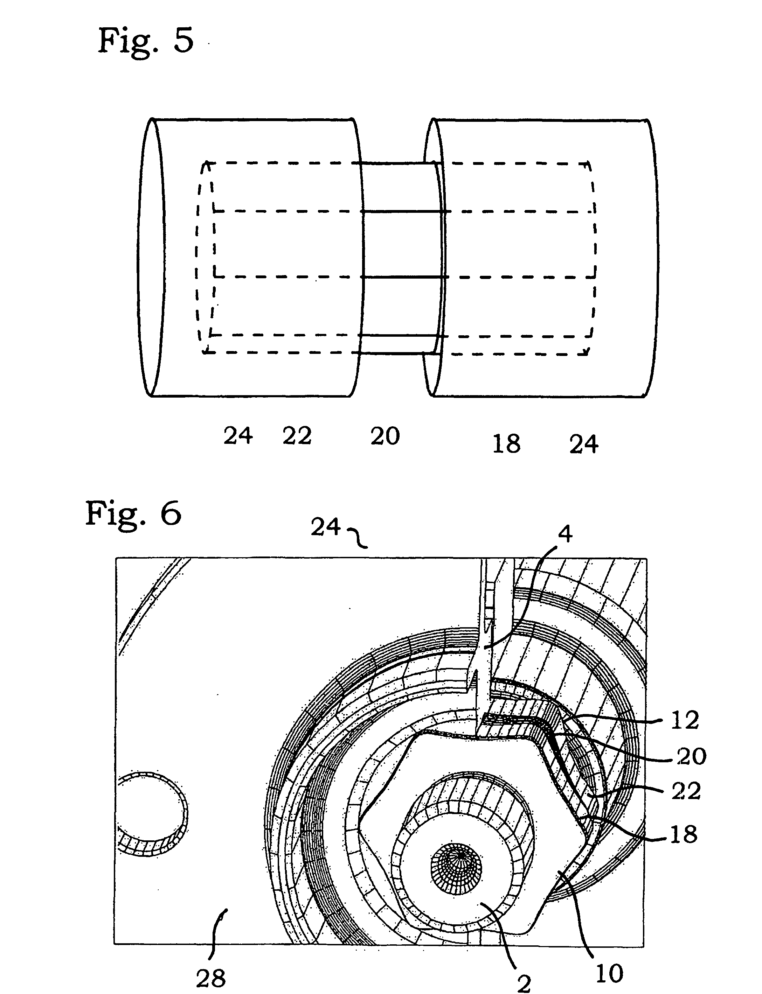

Fig. 5 verdeutlicht in einer prinzipiellen beispielhaften Darstellung die Herstellung einer Welle 2 gemäß Fig. 4. Die trochoidische Ausbuchtungen 9 ausweisende Welle 2 wird in zwei Drehwerkzeuge 24 eingespannt, die dann entsprechend den eingezeichneten Richtungskreisen um den gewünschten Betrag gegeneinander verdreht werden.

Fig. 6 zeigt den Einsatz einer erfindungsgemäßen Welle-Nabe-Verbindung 1 in einem Bremssystem 26 in einer teilweise geschnittenen perspektivischen Darstellung. Das Bremssystem 26 weist eine Bremsscheibe 28 auf, die mit der Nabe 4 verbunden ist. Deutlich zu erkennen ist der Mitnahmeabschnitt 14, der zwei Halteabschnitte 18, 22 und einen Verbindungsabschnitt 20 aufweist. Die trochoidische Aussenkontur der Welle 2 verändert sich ausgehend vom Eingangsquerschnitt 10 kontinuierlich in Richtung des Ausgangsquerschnitts 12. Die trochoidischen Ausbuchtungen 9 der Welle 2 sind im Bereich des Eingangsquerschnitts 10 geringer ausgeprägt als im Bereich des Ausgangsquerschnitts 12.

Durch den Einsatz einer optimierten trochoidischen Kontur hinsichtlich der Anzahl und der Abmessungen der Ausbuchtungen 9 und der Einbuchtungen 11 ist eine Drehmomentübertragung bei minimierten Spannungen sowie gleichzeitig minimierter Relativbewegung zwischen den Bauteilen möglich. Kleine Unterschiede in der Kontur der sich berührenden Bauteile ermöglichen eine weitere Verbesserung der Eigenschaften der Welle-Nabe-Verbindung 1, insbesondere der Lebensdauer und Festigkeit. Durch den Grad der Torsion ist weiterhin eine genaue Positionierung der Welle 2 in der Nabe 4 möglich.

Die minimale Länge des Mitnahmelängenabschnitts 14 der Welle-Nabe-Verbindung 1 wird durch die Betriebslasten bestimmt und ist bei der erfindungsgemäßen Ausführung kürzer als bei konventionellen Verbindungen. Die Reduzierung der Verbindungslänge führt zur Verringerung des Spieles und zur Verbesserung von Geräusch- und Schwingungsphänomenen. Die minimale Länge ist die Länge, die ausreicht, um alle auftretenden Kräfte zu aufzunehmen und das erforderliche Drehmoment zu übertragen. Die Anzahl der trochoidischen Ausbuchtungen 9 und Einbuchtungen 11 sollte so gering wie möglich sein, um unnötige Beschränkungen der Drehbewegung in Umfangsrichtung zwischen Welle 2 und Nabe 4 zu vermeiden. Insbesondere bevorzugt werden konkav gekrümmte Seiten der Welle 2, wie in den Fig. 1 bis 3 dargestellt.

Eine weitere hervorstechende Eigenschaft dieser Erfindung ist, dass für die Wellen 2 und Naben 6 gleicher oder unterschiedlicher Werkstoff eingesetzt werden kann. Beispielsweise kann bei einem Einsatz der erfindungsgemäßen Welle-Nabe-Verbindung 1 bei Radaufhängung von Kraftfahrzeugen die Nabe 2 anstelle von Stahl aus Gußeisen gefertigt werden, wodurch auf ein Räumen der Nabe 2 verzichtet werden kann. Interessante Werkstoffe für die Herstellung von erfindungsgemäßen Welle-Nabe-Verbindungen 1 sind z. B. Keramik, Aluminium, Stahl, MMC, globulares und laminares Gusseisen. Sämtliche Kombinationen dieser Werkstoffe können Verwendung finden.

Grundsätzlich können die Welle 2 oder die Nabe 4 oder auch beide Bauteile tordiert sein.

Um eine möglichst exakte Anpassung und Vorspannung der Welle 2 und der Nabe 4 zu erreichen, ist es möglich, die Welle 2 zunächst im eingesetzten Zustand innerhalb der Nabe 4 zu tordieren, die Welle 2 anschließend auszubauen und außerhalb der Nabe 4 um einen weiteren definierten Winkelbetrag zu tordieren.

Auch kann eine kontinuierliche Formveränderung der Querschnittsfläche der Welle 2 oder der Nabe 4 bei gleichzeitiger Torsion über die Länge des Mitnahmelängenabschnitts 14 sinnvoll sein. Der Eingangsquerschnitt 10 und der Ausgangsquerschnitt 12 weisen dann jeweils eine andere Querschnittsform auf.

Eine erfindungsgemäße Ausführung der Bauteile kann auch unter einem Kegelwinkel der Welle 2 und der Nabe 4 erfolgen.

**Patentansprüche**

1. Welle-Nabe-Verbindung (1) zur Drehmomentübertragung, mit den eine gemeinsame Längsachse (X-X) aufweisenden Bauteilen:

   a) eine um die Längsachse (X-X) rotierbare Welle (2) und

   b) eine zu der Welle (2) koaxiale, über einen Mitnahmelängenabschnitt (14) die Welle (2) mit ihrer Innenkontur (8) umschließende Nabe (6),

   wobei die Welle (2) und die Innenkontur (8) der Nabe (6) im Bereich des Mitnahmelängenabschnitts (14) zumindest einen Halteabschnitt (18) mit unrundem Querschnitt für die Übertragung des Drehmoments aufweisen,
**dadurch gekennzeichnet, dass**

- dass die die Außenkontur der Welle (2) und die Innenkontur der Nabe (4) im Querschnitt eine trochoidische Kontur aufweisen,
- mindestens eines der Bauteile im Bereich des Mitnahmelängenabschnitts (14) zumindest zwei sich entlang der Längsachse (X-X) erstreckende und um die Längsachse (X-X) zueinander winkelversetzte Halteabschnitte (18, 22) derart aufweist, dass die beiden Bauteile mit zumindest geringem Spiel miteinander in Verbindung bringbar sind.

2. Welle-Nabe-Verbindung nach Anspruch 1,
   **dadurch gekennzeichnet,**
   **dass** die Halteabschnitte (18, 22) durch einen kontinuierlich um die Längsachse (X-X) tordierten Verbindungsabschnitt (20) miteinander verbunden sind.

3. Welle-Nabe-Verbindung nach Anspruch 2,
   **dadurch gekennzeichnet,**
   **dass** die Länge des Verbindungsabschnitts (20) weniger als 30 % der Gesamtlänge des Mitnahmeabschnitts (14) beträgt.

4. Welle-Nabe-Verbindung nach Anspruch 3,
   **dadurch gekennzeichnet,**
   **dass** die Welle (2) eine sechsseitige Außenkontur (6) und die Nabe (4) eine sechsseitige Innenkontur (8) aufweist, wobei die relative Exzentrizität E zwischen 3 und 5 % beträgt und sich nach der Formel $E = (D_o - D_i/D_o-D_i) \times 50$ berechnet, wobei $D_o$=äußerer Durchmesser des Polygons und $D_i$ = innerer Durchmesser des Polygors.

5. Welle-Nabe-Verbindung nach einem der Ansprüche 1 bis 4,
   **dadurch gekennzeichnet,**
   **dass** sich die trochoidischen Konturen mit folgenden Formeln bestimmen lassen:

   $$x (\gamma) = (D_m/2) \times \cos (\gamma) + \varepsilon \times \cos ((n-1) \times \gamma)$$

   $$y (\gamma) = (Dm/2) \times \sin (\gamma) - \varepsilon \times \sin ((n-1) \times \gamma)$$

   wobei $D_m$ = Durchnesser einer Kreisscheibe mit gleichen flächenirhalt wie das Polygon, $\varepsilon$ =Unrundheit des Polygons, 1 = Anzahl der seiten des Polygons .

6. Welle-Nabe-Verbindung nach einem der Ansprüche 1 bis 5,
**dadurch gekennzeichnet,**
**dass** die Bauteile einen Kegelwinkel aufweisen.

7. Welle-Nabe-Verbindung nach einem der Ansprüche 1 bis 10,
**dadurch gekennzeichnet,**
**dass** mindestens eines der Bauteile eine kontinuierliche Formveränderung seiner Querschnittsfläche über die Länge des Mitnahmelängenabschnitts (14) aufweist.

8. Welle-Nabe-Verbindung nach einem der Ansprüche 1 bis 7,
**dadurch gekennzeichnet,**
**dass** nur die Welle (2) die Halteabschnitte (18, 22) aufweist.

9. Welle-Nabe-Verbindung nach einem der Ansprüche 1 bis 7,
**dadurch gekennzeichnet,**
**dass** nur die Nabe (2) die Halteabschnitte (18, 22) aufweist.

10. Welle-Nabe-Verbindung nach einem der Ansprüche 1 bis 7,
**dadurch gekennzeichnet,**
**dass** sowohl die Welle (2) als auch die nur die Nabe (6) die Halteabschnitte (18, 22) aufweisen.

**Claims**

1. A shaft-hub connection (1) for torque transmission having the following components, said components comprising a common longitudinal axis (X-X):

   a) a shaft (2) that is rotatable about the longitudinal axis (X-X) and
   b) a hub (4) that is coaxial with the shaft (2) and that, with its interior contour (8), surrounds the shaft (2) along a portion of the driving length (14) thereof,

   the shaft (2) and the interior contour (8) of the hub (4) comprising, in the region of the portion of the driving length (14), at least one retaining portion (18) having a non-round cross-section for transmitting the torque,
   **characterized in that**

   - the exterior contour of the shaft (2) and the interior contour of the hub (4) have a cross-section with a trochoidal contour,
   - at least one of the components comprises, in the region of the portion of the driving length (14), at least two retaining portions (18, 22) that extend along the longitudinal axis (X-X) and are angularly offset relative to one another about the longitudinal axis (X-X) in such a manner that the two components are connectable with at least little clearance.

2. The shaft-hub connection in accordance with claim 1,
**characterized in**
**that** the retaining portions (18, 22) are connected with each other by a connecting portion (20) that is continuously twisted about the longitudinal axis (X-X).

3. The shaft-hub connection in accordance with claim 2,
**characterized in**
**that** the length of the connecting portion (20) is less than 30 % of the overall length of the driving portion (14).

4. The shaft-hub connection in accordance with claim 3,
**characterized in**
**that** the shaft (2) comprises a hexagonal exterior contour (6) and the hub (4) a hexagonal interior contour (8), the relative excentricity E ranging between 3 and 5 % and being calculated by the formula $E = (D_n - D_i/D_n - D_i).times.50$, where $D_o$ is the outer diameter of the polygon and $D_i$ is the inner diameter of the polygon.

5. The shaft-hub connection in accordance with any of the claims 1 through 4,
**characterized in**
**that** the trochoidal contours may be determined by the following formulae:

$$x(\gamma) - (D_m/2) \times \cos(\gamma) + \varepsilon \times \cos((n-1) \times \gamma)$$

$$y(\gamma) = (D_m/2) \times \sin(\gamma) - \varepsilon \times \sin((n-1) \times \gamma)$$

where $D_m$ is the diameter of a circular disk having the same area as the polygon, $\varepsilon$ is the non-round shape of the polygon, A is the number of sides of the polygon.

6. The shaft-hub connection in accordance with any of the claims 1 through 5,
**characterized in**
**that** the components comprise an angle of taper.

7. The shaft-hub connection in accordance with any of the claims 1 through 6,
**characterized in**
**that** at least one of the components has a cross-sectional area the shape of which changes continuously over the length of the portion of the driving length (14).

8. The shaft-hub connection in accordance with any of the claims 1 through 7, **characterized in that** only the shaft (2) comprises the retaining portions (18, 22).

9. The shaft-hub connection in accordance with any of the claims 1 through 7, **characterized in that** only the hub (4) comprises the retaining portions (18, 22).

10. The shaft-hub connection in accordance with any of the claims 1 through 7, **characterized in that** both the shaft (2) and the hub (4) comprise the retaining portions (18, 22).

**Revendications**

1. Couplage arbre-moyeu (1) pour transmission de couple avec les composants suivants, s'étendant le long d'un même axe longitudinal (X-X):

   a) un arbre (2) monté mobile en rotation sur l'axe longitudinal (X-X) et
   b) un moyeu (4) disposé de façon coaxiale selon l'arbre (2) et entourant cet arbre (2) par son contour intérieur (8) sur une portion de la longueur d'entraînement (14),

   l'arbre (2) et le contour intérieur (8) du moyeu (4) comportant, dans la région de la portion de la longueur d'entraînement (14), au moins une portion de retenue (18) à section non circulaire pour la transmission du couple, **caractérisé en ce que**

   - le contour extérieur de l'arbre (2) et le contour intérieur du moyeu (4) ont une section au contour trochoïde,
   - un des composants au moins comporte, dans la région de la portion de la longueur d'entraînement (14), au moins deux portions de retenue (18, 22) décalées angulairement sur l'axe longitudinal (X-X) et s'étendant le long de cet axe longitudinal (X-X) de sorte que les deux composants puissent être reliés avec un faible jeu au moins.

2. Couplage arbre-moyeu selon la revendication 1, **caractérisé en ce que** les portions de retenue (18, 22) sont reliées par une portion de liaison (20) vrillée de manière continue autour de l'axe longitudinal (X-X).

3. Couplage arbre-moyeu selon la revendication 2, **caractérisé en ce que** la longueur de la portion de liaison (20) représente moins de 30 % de la longueur totale de la portion d'entraînement (14).

4. Couplage arbre-moyeu selon la revendication 3, **caractérisé en ce que** l'arbre (2) comporte un contour extérieur hexagonal (6) et le moyeu (4) un contour intérieur (8) hexagonal, l'excentricité relative E étant comprise entre 3 et 5 % et calculée selon la formule $E = (D_n - D_i/D_n - D_i) \times 50$, dans laquelle $D_o$ est égal au diamètre extérieur du polygone et $D_i$ au diamètre intérieur du polygone.

5. Couplage arbre-moyeu selon l'une quelconque des revendications 1 à 4, **caractérisé en ce que** les contours trochoïdes peuvent être déterminés à partir des formules suivantes:

$$x(\gamma) - (D_m/2) \times \cos(\gamma) + \varepsilon \times \cos((n-1) \times \gamma)$$

,

$$y(\gamma) = (D_m/2) \times \sin(\gamma) - \varepsilon \times \sin((n-1) \times \gamma)$$

dans lesquelles $D_m$ est égal au diamètre d'un disque circulaire de même aire que le polygone, $\varepsilon$ est égal à la forme non circulaire du polygone, A est égal au nombre de côtés du polygone.

6. Couplage arbre-moyeu selon l'une quelconque des revendications 1 à 5, **caractérisé en ce que** les composants ont un angle de cône.

7. Couplage arbre-moyeu selon l'une quelconque des revendications 1 à 6, **caractérisé en ce qu'**au moins un des composants a une section dont l'aire varie continûment de forme sur la longueur de la portion de la longueur d'entraînement (14).

8. Couplage arbre-moyeu selon l'une quelconque des revendications 1 à 7, **caractérisé en ce que** seul l'arbre (2) comporte les portions de retenue (18, 22).

9. Couplage arbre-moyeu selon l'une quelconque des revendications 1 à 7, **caractérisé en ce que**

**que** seul le moyeu (4) comporte les portions de retenue (18, 22).

10. Couplage arbre-moyeu selon l'une quelconque des revendications 1 à 7,
**caractérisé en ce**
qu'à la fois l'arbre (2) et le moyeu (4) comportent les portions de retenue (18, 22).

Fig. 1

Fig. 2

Fig. 3

Fig. 4

Fig. 5

24    22        20        18    24

Fig. 6

24          4

12
20
22
18

28        2    10